# EUROPEAN PATENT SPECIFICATION

(11) **EP 0 276 055 B1**
(45) Date of publication and mention of the grant of the patent: **28.07.1993**
(21) Application number: 88300097.8
(22) Date of filing: 07.01.1988
(51) Int. Cl.: B29C 55/02, B29C 67/14

(54) **Method of producing thin reinforced resin sheet**
Methode zur Herstellung einer dünnen Folie aus einem verstärkten Harz
Méthode de production d'une pellicule mince d'une résine renforcée

(30) Priority: 23.01.1987 JP 14629/87
(43) Date of publication of application: 27.07.1988
(73) Proprietor: SUMITOMO CHEMICAL COMPANY, LIMITED, Chuo-ku Osaka 541 (JP)
(72) Inventor: Nishibara, Hajime, Ehime-ken (JP); Morii, Akira, Ehime-ken (JP); Hayashi, Mikio, Ehime-ken (JP); Mihara, Taro, Ehime-ken (JP); Wada, Muneharu, Ehime-ken (JP); Chosokabe, Yasushi, Ehime-ken (JP)
(74) Representative: Geering, Keith Edwin

(56) References cited:
- EP-A- 0 195 562
- FR-A- 2 282 985
- GB-A- 2 099 754
- US-A- 4 532 099

## Description

The present invention relates to a method of producing a thin fibre- reinforced resin sheet.

Synthetic resin or rubber sheets reinforced with carbon fibre, glass fibre, alumina fibre, aromatic polyamide fibre, etc. include prepregs of continuous fibre bundle sheets impregnated with thermo-setting resin, and sheet moulding compounds in which chopped strands are used. They are widely utilized for sports or leisure use such as fishing rods, golf shafts, etc., industrial materials, moulding materials for airplanes and cars, etc.

With the diversification of their use, fibre-reinforced resin sheets having various thicknesses are being developed.

To give an example for prepreg sheets, their fibre content is generally 50-300 g/m², but recently thin prepreg sheets of under 50 g/m² have been developed.

Thin prepreg sheets are disclosed in JP-A-165428/1982 and JP-A-74347/1983.

Methods of producing ordinary prepreg sheets are known of old from numerous literature references, e.g. SEN-1 GAKKAISHI, vol.34, August 1978, in which carbon fibre is used as an example.

JP-A-11315/1985 discloses a method of producing thin prepreg sheets.

The regulation of the thickness of these sheets is by increase or decrease of the fibre weight per unit area (that is, the number of filaments per fibre bundle) or by change of the thickness of the fibre itself.

For example, when producing a very thin carbon fibre prepreg sheet whose fibre content is 10-20 g/m², a fibre bundle is used which is composed of 1,000-2,000 filaments and the weight per unit length of which is 0.06-0.15 g/m.

In general, the fewer the number of filaments of a fibre bundle, the more expensive is the fibre bundle. Moreover, finer monofilaments are more expensive, and such monofilaments are susceptible to breakage and are liable to be entangled with each other; this makes handling difficult, and a prepreg sheet produced from such monofilaments is expensive and may have poor linearity of fibre arrangement.

When a thin prepreg sheet is produced from a fibre bundle composed of many thick monofilaments, the fibre bundles are spread out more than for an ordinary prepreg sheet; this leaves many gaps between fibres, and consequently tends to give a non-uniform sheet.

EP-A-0195562 discloses a method of making a shaped product by sandwiching a fibre-reinforced thermoformable sheet between sheets of shaping polymer, and applying differential pressure across the thickness of the heated assembly to shape it.

The present invention is a method of producing a flat thin reinforced resin prepreg sheet which comprises stretching of a starting fibre-reinforced resin prepreg sheet in intimate contact with thermoplastic resin sheet on one or both faces thereof, the thermoplastic resin sheet(s) being stretchable by at least 1.5 times. This method is capable of producing thin reinforced resin sheets having uniform mechanical and physical properties.

The reinforced resin sheets used as starting material in the present invention can be selected from those which are already well known and widely used.

These include, for example, prepreg sheets having continuous fibres arranged unidirectionally, sheets of chopped strand fibres treated with sheet moulding compound (hereinafter referred to as SMC sheets), and resin sheets reinforced with whiskers.

The advantage of the invention is particularly evident in the case of prepreg sheets composed of continuous fibres arranged unidirectionally.

These fibre-reinforced resin sheets used as starting material may be produced by any known method. These starting fibre-reinforced sheets usually have both faces coated with release paper or plastic film. The fibres of these sheets may be those conventionally used.

Examples of such fibres include inorganic fibers such as glass, carbon and graphite fibres; ceramic fibres such as aluminous, boron, titania and silicon carbide fibres; organic fibres including natural fibres and synthetic fibres such as cellulosic, aromatic polyamide, polyester, polyamide, acrylic, polyethylene and polypropylene fibres; metal fibres such as stainless steel fibres; metal coated inorganic and organic fibres; ceramic-coated metal fibres, etc.

These fibres can be used alone or in combination of two or more kinds depending on the particular required properties, and may be used just as they are sold on the market.

The synthetic resins and rubbers used as matrices for the starting fibre-reinforced resin sheets can also be those well known and used for fibre-reinforced resins.

These include resins which are essentially thermosetting resins but are thermoplastic before curing, such as epoxy, phenol, alkyd, urea-formaldehyde, melamine-formaldehyde, unsaturated polyester, aromatic polyamide, polyamide-imide, polyester-imide, polyimide, polybenzothiazole, and silicone resins etc.; thermoplastic resins such as polyethylenes, polypropylenes, polymethylmethacrylates, polystyrenes (including high impact polystyrene), polyvinyl chlorides, ABS resins, styrene-acrylonirile copolymers, polyamides, polyacetals, polysulfones, polycarbonates, polyphenylene oxides, polyethersulfones, polyether ether ketones etc.; synthetic rubbers such as polybutadiene, polyisoprene, polychloroprene, styrene-butadiene copolymer (SBR), acrylonitrile-butadiene copolymer (NBR) and silicone rubbers; natural rubber; and mixtures of these. Epoxy resins, unsaturated polyester resins polysulfones, polyethersulfones, polyether ether ketones and polyimides are preferred.

The thermoplastic resin sheets which are to be stretched together with the starting reinforced sheets are those that can be stretched more than 1.5 times in the stretching direction; these include, for example, sheets of high density polyetheylene, low density polyethylene, polypropylene, polyethylene terephthalate, polystyrene, polyvinyl chloride, polyvinyl alcohol, polyamide, polyethersulfone and polyether ether ketone, etc. A thermoplastic resin sheet is used in intimate contact with one or both sides of the reinforced sheet.

The kind and thickness of the thermoplastic resin sheet should be so selected that its tensile strength is larger than that of the starting reinforced sheet under the stretch processing conditions - i.e. stretch direction, stretch time, and stretch temperature. When thermoplastic resin sheet is used on both faces of the reinforced sheet, the relevant tensile strength is the sum of that of both facing sheets. When one such facing sheet is used, the other face of the reinforced sheet may be stuck to a very thin and easily stretchable thermoplastic resin film, if necessary, for the purposes of prevention of sticking and surface protection.

One particular example of the invention uses an epoxy resin-impregnated and unidirectionally arranged prepreg sheet and a high density polyethylene sheet of the order of 50-300µ thick.

It is advantageous that the resin of the starting reinforced sheet should have close adhesion to the thermoplastic resin sheet.

In order to bring the thermoplastic resin sheet or film into intimate contact with a surface of the starting reinforced sheet, any release paper or plastic film on the surface is first peeled off and then the thermoplastic film is applied uniformly to the exposed surface. Preferably the time between peeling off and application is short. Caution should be exercised so that air does not remain between the contacting surfaces.

Subsequently the composite sheet is heated to a temperature at which the matrix resin of the starting reinforced sheet can exhibit its stickiness and a uniform compressive force is applied to the composite.

In a particular case, the composite sheet may be caused to pass between rollers heated to a prescribed temperature.

The heating at this time may also serve as the preheating for the stretching step.

When making a large size thin sheet from a plurality of starting reinforced resin sheets, gaps may be generated after stretching, if the ends of the said sheets are only abutted. In order to prevent the generation of such gaps, the end parts can be overlapped slightly to an extent of 0.5 mm, and the thermoplastic sheet is stuck to the overlapped sheets.

The stretching direction may be crosswise or lengthwise. However, with prepreg fibre-reinforced sheets in which continuous fibres are arranged unidirectionally, there are often cases where the continuous fibres themselves are unstretchable or difficult to stretch. Therefore, stretch is generally made under tension crosswise, that is, in the direction at right angles to the direction of the continuous fibers, or in a direction having a component at right angles to the fibre direction.

In the case of SMC sheet or resin sheet reinforced with whiskers, the stretching direction may be lengthwise and/or crosswise. When the stretching is conducted in one direction only, the fibres tend to become aligned with the stretching direction so that the mechanical strength of the sheet can become directional. Such a sheet is suitable for specific uses. Furthermore, when the matrix resin is a thermoplastic resin, molecular orientation can occur, so that the strength per thickness of the fibre-reinforced sheet can be increased.

As regards the methods of stretching, it is possible to apply methods of producing monoaxially or biaxially stretched films from thermoplastic resin films. These include roll stretch methods wherein the sheet is made to pass successively between a plurality of rolls of differing diameter and rate of rotation whereby the sheet is stretched under tension; tenter stretch methods wherein both ends of the sheet are successively grasped and held by clip chains, by which tension is applied laterally to stretch it; and methods wherein said clip chains are moved successively on gradually spreading guide rails, by which tension is applied laterally or laterally and longitudinally to stretch the sheet.

The roll stretch method performs stretching in the longitudinal direction only. Therefore, the method can be continuously combined with application to the starting reinforced sheet of the thermoplastic resin sheet, which itself can be an extension of production of the starting reinforced sheet; the latter may instead be formed separately and supplied from the roll.

In the case of a prepreg fibre-reinforced sheet with unidirectional continuous fibres, the sheet can be cut into pieces of a prescribed length less than the width of the roll. Then the cut pieces of sheet are turned and arranged crosswise and are stretched in the direction perpendicular to the fibres or in a direction having a component perpendicular to the fibres.

In the case of stretching other starting fibre-reinforced resin sheet in both lengthwise and crosswise directions by the roll stretch method, the sheet is first stretched in the lengthwise direction, and subsequently it is cut into pieces of a prescribed length as described above. Then the cut pieces are turned and arranged crosswise and stretched.

The apparatus for the roll stretch method can be of a type well-known for producing monoaxially stretched films as mentioned above, e.g. having a raw sheet fixing table followed by a combination rolls part and a winding part.

The combination rolls part can have preheating, stretch, annealing and cooling parts.

Each roll is set at a temperature suitable for the resin of each sheet. The annealing part is used as necessity requires depending on the kind of matrix resin.

In the stretch part, external heating may be applied by a hot air current or an electric heater.

The temperature at the stretch part is such as to allow the stretch of both sheets, that is to say, a temperature at which the resin or rubber of the starting reinforced sheet becomes sufficiently plastic and low in viscosity. For example, it is equal to the temperature for producing the starting reinforced sheet or several (e.g.tens) °C lower than that temperature.

The stretch ratio is regulated by changing the peripheral speed of the rolls in the stretch part.

The thickness of the product sheet and the fibre content per unit area of the sheet are in inverse proportion to the change of the area of the sheet, so that these call be regulated by the stretch ratio.

In the tenter system, stretch can be either crosswise, or in both crosswise and lengthwise directions, as mentioned previously.

The stretch ratio can be determined by the predetermined position of the clip chain guide rails.

By the method of the present invention, it is possible to easily produce, from the usual fibre-reinforced sheets, thinner sheets of various thicknesses, and among others, very thin sheets.

In the case of prepreg sheets in which continuous files are arranged unidirectionally, it is possible to produce thin prepreg sheets of uniform fibre distribution and excellent fibre linearity even from fibre bundles composed of thick and many monofilaments per bundle.

When this thin prepreg sheet is used in combination with an ordinary prepreg sheet, one disposed over the other with their fibre directions at right angles, this combined sheet is effective in increasing the crush strength, flexural strength and compression strength of a cylindrical body such as a fishing rod, golf club shaft, etc. formed from such a sheet; when they are disposed with their fibres crossing obliquely, this combined sheet is effective in increasing the twisting strength.

Furthermore, when the fibre-reinforced sheet is an SMC sheet or a sheet blended with whiskers, it is not only possible to easily produce a thinner sheet of various thicknesses or a very thin sheet, but also to produce a sheet for specific uses by arranging the internal reinforcing fibres unidirectionally so that the resulting sheet can have directionality in strength.

When the matrix resin of the fibre-reinforced sheet is a thermoplastic resin, it is possible to cause the sheet to have directionality in mechanical strenth by molecular orientation, or it is possible to provide the sheet for specific processing by utilizing the heat shrinking properties the secondary processing step.

The present invention will be explained in further detail by way of Examples but the invention is not limited to these Examples.

In order to evaluate the thin prepreg sheet in the Examples, the sheet was observed with an optical microscope; the lengths of the gaps between fibres were measured and its maximum value and the linearity of the fibres were examined.

A pipe was formed from a combination with an ordinary prepreg sheet and the formed pipe was observed with a scanning type electron microscope; examination was made for voids in the cross-section and for the area of the voids if any, and also for wrinkles.

The stretching apparatus used was a monoaxial stretching apparatus having a raw sheet fixing table, six preheating rolls, five stretch rolls, an annealing roll, a cooling roll, and a winder.

### EXAMPLE 1

As the starting fibre-reinforced resin sheet was used a fibre-reinforced resin sheet, whose fibres were Carbon Fibre AS4 (produced by Hercules Corp.; modulus of elasticity 24 ton/mm²), and whose yarn was composed of 3,000 filaments/bundle. The sheet was impregnated with a matrix resin which was a mixed epoxy resin of bisphenol A type and cresol novolac type. This sheet was a prepreg sheet with unidirectionally arranged continuous fibres, a resin content of 45 weight %, a fibre weight per unit area of 80 g/m², and 1 m in width and 15 m in length.

The prepreg sheet was cut into pieces of a length of 1.1 m, and 13 cut pieces were arranged to re-form a sheet with the fibres extending crosswise.

To the two faces of the re-formed sheet, respective stretchable high density polyethylene sheets, 120 µ thick, 1.25 m wide and 20 m long, were applied and the resulting composite sheet was caused to pass between heated rolls at 50°C and was wound to obtain a roll of raw sheet for stretching use.

The preheating part of the monoaxial stretching apparatus was set at 100°C, the stretch part at 125°C, the annealing part at 125°C, and the cooling part at 40°C. The composite raw sheet was caused to travel from the raw sheet fixing table onto the rolls rotated at a speed of 3 m/min in the preheating part, and at 24 m/min in the stretch part, and finally it was wound onto the winder to obtain a thin prepreg sheet 1.1 m wide and 100 m long and having a fibre weight per unit area of 10 g/m². The results of evaluation are shown in Table 1.

Then, to form a pipe, a separately prepared prepreg sheet of continuous fibres arranged unidirectionally composed of Carbon Fibre IM6 (product of Hercules Corp.; modulus of elasticity 30 ton/mm²) and mixed epoxy resin of bisphenol A type and cresol novolac type, whose fibre weight per unit area was 125 g/m² and resin content was 34 weight %, was stuck together with said thin prepreg sheet so that their fibre directions crossed at 90°. Thereafter, the resulting stuck sheet was wound four times on a metal rod 10 mm in diameter with the thin prepreg sheet innermost.

After this roll was wound tightly with a shrinking tape of polypropylene, it was heated to cure in a hot air current oven at 100°C for one hour, followed by heating at 120°C for one hour, to obtain a pipe shaped body. The results of evaluation are shown in Table 1.

### Comparative Example 1

A pipe shaped body was produced in the same way as in Example 1 except that a thin prepreg sheet having a fibre weight per unit area of 10 g/m² produced in the same manner as the starting (unstretched) prepreg sheet of Example 1. Thus the conventional method of producing an ordinary prepreg sheet was used. The result of evaluation are shown in Table 1.

### Example 2

A thin prepreg sheet was produced as in Example 1 except that the continuous unidirectional fibres of the starting fibre-reinforced resin sheet were Carbon Fibre IM6 bundles containing 6000 fibres per bundle. The result of evaluation is shown in Table 1.

### Example 3

A thin prepreg sheet was produced as in Example 1 except that the continuous unidirectional fibres of the starting fibre-reinforced resin sheet were bundles of alumina fibres (product of Sumitomo Chemical Compamy, Ltd.; diameter 9 µ ) containing 1,000 fibres/bundle, the fibre weight per unit area was 80 g/m², and the resin content was 30 weight %.

The result of evaluation is shown in Table 1.

**Table 1**

| | Thin prepreg sheet | | Pipe shaped body | |
|---|---|---|---|---|
| | Gap mm | Fibre linearity | Voids | Wrinkles |
| Example 1 | 0.3 | Good | No | No |
| Comparative Example 1 | 2 | Rather bad | Present (3%) | Present |
| Example 2 | 0.4 | Good | No | No |
| Example 3 | 0.3 | Good | No | No |

## Claims

1. A method of producing a flat thin fibre-reinforced resin prepreg sheet which comprises stretching of a starting fibre-reinforced resin prepreg sheet in intimate contact with thermoplastic resin sheet on one or both faces thereof, the thermoplastic resin sheet(s) being stretchable by at least 1.5 times.

2. A method according to claim 1 wherein the starting reinforced prepreg sheet has substantially undirectionally arranged reinforcing fibres.

3. A method according to claim 1 or 2 wherein the thermoplasticc resin sheet(s) is/are of higher total tensile strength than the starting fibre-reinforced prepreg sheet.

## Patentansprüche

1. Verfahren zum Herstellen einer flachen dünnen faserverstärkten Kunststoff-Prepreg-Schicht, die aufweist das Dehnen einer ursprünglichen faserverstärkten Kunststoff-Prepreg-Schicht in engem Kontakt mit einer thermoplastischen Kunststoffschicht auf deren einer oder beider Flächen, wobei die thermoplastische Kunststoffschicht(en) um wenigstens 1,5 mal dehnbar ist.

2. Verfahren nach Anspruch 1, wobei die ursprüngliche verstärkte Prepreg-Schicht im wesentlichen in einer Richtung angeordnete Verstärkungsfasern hat.

3. Verfahren nach Anspruch 1 oder 2, wobei die thermoplastische Kunststoffschicht(en) von höherer Gesamt-Zugfestigkeit ist(sind) als die ursprüngliche faserverstärkte Prepreg-Schicht.

## Revendications

1. Procédé de production d'une feuille préimprégnée mince plate de résine renforcée par des fibres, qui comprend l'étirage d'une feuille préimprégnée de résine de départ renforcée par des fibres en contact étroit avec une feuille de résine thermoplastique sur l'une de ses faces ou ses deux faces, la ou les feuilles de résine thermoplastique étant étirables d'un facteur au moins égal à 1,5.

2. Procédé suivant la revendication 1, dans lequel la feuille préimprégnée renforcée de départ possède des fibres de renforcement disposées de manière pratiquement unidirectionnelle.

3. Procédé suivant la revendication 1 ou 2, dans lequel la ou les feuilles de résine thermoplastique possèdent une résistance totale à la traction supérieure à celle de la feuille préimprégnée de départ renforcée par des fibres.
